**Europäisches Patentamt**

**European Patent Office**

**Office européen des brevets**

(19)

(11) Numéro de publication : **0 383 853 B1**

(12) # FASCICULE DE BREVET EUROPEEN

(45) Date de publication du fascicule du brevet :
**16.12.92 Bulletin 92/51**

(51) Int. Cl.$^5$ : **B05D 7/02,** B05D 5/06,
B44C 5/04, B44C 3/02

(21) Numéro de dépôt : **89906699.7**

(22) Date de dépôt : **22.06.89**

(86) Numéro de dépôt international :
**PCT/CH89/00118**

(87) Numéro de publication internationale :
**WO 89/12511 28.12.89 Gazette 89/30**

(54) **PROCEDE DE FABRICATION D'UN MATERIAU DE REVETEMENT PROTECTEUR ET/OU DECORATIF ET REVETEMENT REALISE SELON CE PROCEDE.**

(30) Priorité : **23.06.88 FR 8808629**

(43) Date de publication de la demande :
**29.08.90 Bulletin 90/35**

(45) Mention de la délivrance du brevet :
**16.12.92 Bulletin 92/51**

(84) Etats contractants désignés :
**AT BE CH DE FR GB IT LI LU NL SE**

(56) Documents cités :
**DE-A- 3 421 181**
**FR-A- 2 204 155**
**US-A- 4 293 603**
**US-A- 4 371 585**

(73) Titulaire : **ACTINO S.A.**
**29, rue Girardet**
**CH-2400 Le Locle (CH)**

(72) Inventeur : **TYERMAN, David, Whitfield**
**15, rue Edouard-Verdan**
**CH-1400 Yverdon-les-Bains (CH)**

(74) Mandataire : **Nithardt, Roland**
**Cabinet Roland Nithardt Conseils en Propriété**
**Industrielle S.A. Y-Parc Scientifique et**
**Technologique Chemin de la Sallaz**
**Casepostale 3347**
**CH-1400 Yverdon-les-Bains (CH)**

## Description

La présente invention concerne un procédé de fabrication d'une plaque de revêtement protecteur et/ou décoratif agencée pour être appliquée sur une surface quelconque d'un objet, notamment d'un élément de mobilier.

Elle concerne également une plaque de revêtement protecteur et/ou décoratif réalisée selon ce procédé.

De nombreuses matières synthétiques ont été utilisées à ce jour sous diverses formes pour réaliser des revêtements décoratifs ou protecteurs de différents objets, notamment d'éléments de mobilier à usage privé ou professionnel.

On trouve dans le commerce depuis environ quarante ans des matériaux présentés sous la forme de feuilles, réalisées à base de matières synthétiques polymérisées. Ces feuilles sont disponibles en diverses dimensions et épaisseurs et ont des formes ou des aspects extrêmement variés. Elles sont parfois transparentes ou translucides et parfois colorées. Ces produits sont fabriqués par de nombreux fabricants et sont commercialisés sous des dénominations diverses. A titre d'exemple, le produit vendu sous la désignation "HESALITE" est fabriqué par la société Bally CTU en Suisse, et les feuilles transparentes commercialisées sous la dénomination "PLEXIGLASS" sont fabriquées par la société Rohm GmbH également en Suisse. Ces produits peuvent être utilisés seuls ou en combinaison avec d'autres produits similaires ou différents pour la réalisation de surfaces décoratives et/ou protectrices.

Toutefois, l'utilisation de feuilles de revêtement à base de substances synthétiques polymérisables pour former des surfaces ou des revêtements de surface protecteurs ou décoratifs n'a pas connu un très grand essor à ce jour. Dans la pratique, ces revêtements ne se sont pas révélés particulièrement efficaces en matière de protection de la surface, ce qui a, encore contribué à limiter leur usage.

Ces dernières années, plusieurs producteurs de matières synthétiques polymérisables ont introduit dans leur production un revêtement acrylique comportant additionnellement une surface résistante à l'abrasion. Le produit commercialié sous la dénomination "PLEXIGLASS XT230", fabriqué par la société Rohm GmbH en Suisse, constitue un exemple typique de ce nouveau genre de produits. Toutefois, son utilisation comme revêtement n'a pas connu un grand succès en raison de nombreux problèmes techniques qui ont empêché son développement.

Par ailleurs, on connaît depuis de nombreuses années des matériaux pour revêtement de surface qui sont censés assurer une protection efficace tout en présentant une surface colorée, et qui sont réalisés par laminage sous très haute pression de matières synthétiques. Les matériaux commercialisés dans le monde entier sous la dénomination "FORMICA" et "ARBORITE" entrent dans cette catégorie. Par ailleurs, on a produit et commercialisé aux Etats-Unis un produit appelé "VITRICOR" qui est constitué d'une feuille réalisée en une matière acrylique transparente et enduite, sur sa surface arrière, d'une couche de peinture acrylique. Ces matériaux sont rigides et cassants et se présentent généralement sous la forme de feuilles ou de plaques planes. Le procédé de fabrication d'un tel produit est décrit par le brevet américain No. 4'293'603.

Malgré la multiplicité des produits existants, aucun n'a, à ce jour, permis de résoudre de façon satisfaisante le problème du revêtement de surface qui doit à la fois être protecteur et décoratif. En effet, aucun de ces matériaux ne permet de réaliser un revêtement décoratif ayant d'une part une profondeur de coloration suffisante pour assurer la protection requise et susceptible, d'autre part, d'être formé pour s'adapter à toutes les formes de surface, et en particulier à des rebords arrondis à faible rayon de courbure ou à des bords à angle droit. Les matériaux connus ne présentent pas ces deux caractéristiques fondamentales à savoir : la résistance à l'abrasion et la possibilité de se conformer à toutes les surfaces quelle que soit leur forme.

En outre, pour fabriquer les matériaux de l'art antérieur, on a utilisé des peintures ou des laques acryliques pour colorer les plaques de base, en espérant que ces peintures ou ces laques soient d'une part compatibles avec les matériaux utilisés pour fabriquer lesdites plaques de base et d'autre part qu'elles adhèrent à ces plaques. Cette espérance a été déçue et les fabricants ont été confrontés à de sérieux problèmes d'adhérence entre les surfaces, la couche de couleur ayant souvent tendance à se séparer de la surface de plaque de base.

Pour tenter de remédier à ce problème, on a appliqué une couche d'impression à l'arrière de la couche de couleur pour augmenter la liaison entre cette couche et le matériau utilisé pour réaliser la plaque de base. Les problèmes d'adhérence n'ont toutefois pas été résolus pour autant.

Enfin, les matériaux de l'art antérieur ont été produits et sont utilisés sous forme de grandes feuilles planes destinées à être appliquées à titre de revêtement sur des surfaces planes ou ayant un grand rayon de courbure.

Bien que ces matériaux aient des duretés variables, les plaques ou feuilles sont relativement rigides et manquent de flexibilité ce qui limite leur utilisation à la réalisation de revêtements plans ou à grands rayons de courbure. Ce fait introduit également une restriction en ce qui concerne les couleurs ou les motifs susceptibles d'être appliqués, étant donné que la plupart des matériaux de base connus ont un revêtement dur sur les deux faces, ce qui entraîne un choix très limité de substances susceptibles d'adhérer aux surfaces ainsi revêtues ou nécessite l'éloignement de cette surface pour permettre la mise en place d'une couche adhésive.

En ce qui concerne la fabrication proprement dite, les matériaux de l'art antérieur ne se prêtent qu'à une fabrication en quantité limitée et toutes les techniques de production sont adaptées à une telle fabrication limitée.

Enfin, les produits de l'art antérieur ont généralement une épaisseur limitée à quelques dixièmes de milimètre et ne dépassent en général pas, ou très faiblement, une épaisseur d'environ un millimètre ce qui constitue un inconvénient supplémentaire pour certaines applications.

La présente invention se propose de pallier les différents inconvénients mentionnés ci-dessus en développant un procédé de fabrication d'une plaque de revêtement protecteur, c'est-à-dire résistant à l'abrasion, et décoratif c'est-à-dire présentant une surface dont l'aspect peut être varié indéfiniment.

Un autre objet de la présente invention est de réaliser une surface protectrice et décorative qui peut être colorée ou peut comporter des motifs adaptés aux goûts individuels.

Un autre objet de la présente invention consiste à réaliser un matériau de revêtement protecteur et décoratif qui peut être conformé pour s'adapter à toutes les formes de surface, de manière à présenter une grande souplesse d'utilisation.

Un autre objet de la présente invention consiste à réaliser un matériau de revêtement protecteur et décoratif qui puisse être fabriqué au moyen de techniques modernes automatisées assurant un contrôle de qualité suffisant pour que l'on puisse produire des revêtements de grandes dimensions ayant des caractéristiques constantes.

Un autre objet de la présente invention consiste à réaliser des matériaux de revêtement protecteur et décoratif susceptibles d'être fixés sur d'autres surfaces par un grand nombre de méthodes conventionnelles qui ne sont pas limitées aux colles à chaud, aux colles vinyliques, aux colles de contact qui sont actuellement nécessaires pour assurer l'adhérence des feuilles de matériaux de l'art antérieur.

Un autre objet de la présente invention consiste à réaliser un matériau décoratif et protecteur qui épouse des formes particulières et qui présente une résistance particulièrement élevée à l'abrasion.

Un autre objet encore de la présente invention consiste à réaliser un matériau de revêtement décoratif et protecteur réalisé dans des épaisseurs très diverses de manière à s'adapter à un grand nombre d'utilisations et à présenter des aspects très divers.

Un autre objet encore de la présente invention consiste à réaliser un matériau de revêtement protecteur et décoratif particulièrement destiné à être utilisé comme revêtement mural (intérieur et extérieur), pour la fabrication de baignoires et de mobilier de salle de bains, comme revêtement de piscines, de bureaux, de bars, de comptoirs, comme revêtement de sols, comme plaques ou panneaux décoratifs, pour la confection d'écrans de protection anti-bruit pour autoroutes, pour la fabrication de panneaux indicateurs ou panneaux d'affichage, comme plaques d'identification de sociétés, comme revêtement de portes, revêtements de plafonds, pour la fabrication de jeux tels que des puzzles, des abat-jour, des écrans de cinéma, des boîtes ou des présentoirs pour la bijouterie, pour le revêtement de coffres etc.

Ces divers buts sont atteints grâce au procédé de fabrication d'une plaque de revêtement protecteur et/ou décoratif, selon l'invention, agencée pour être appliquée sur une surface quelconque d'un objet, notamment d'un élément de mobilier, caractérisé en ce qu'on utilise comme support de base une feuille d'une matière synthétique polymérisée transparente, en ce qu'on applique une couleur en déposant sur une face de ladite feuille une substance colorée choisie parmi les matériaux suivants : encres polyesters ou acryliques, peintures à base de polyuréthane, ou en ce qu'on colle une couche de placage en bois naturel au moyen d'une colle acrylique, et en ce qu'on applique une couche protectrice sur la couche colorée, ou la couche de placage.

Selon une forme de réalisation préférée, on applique sur la surface supérieure de la plaque de revêtement, une couche additionnelle résistant à l'abrasion en déposant une solution colloïdale de silice en suspension dans un solvant synthétique et en procédant à une polymérisation à chaud de cette solution.

Selon un mode de réalisation particulièrement avantageux, on applique la couleur par dépôt d'une substance colorée selon l'une des techniques suivantes : criblage, pulverisation, dépôt au rouleau ou à la brosse, jet de peinture.

Ladite substance colorée comporte, de préférence, au moins un des composés suivants : encres synthétiques à base de polyester ou acryliques, solution tinctoriale, pigments colorés liés par une résine, peinture à base de polyuréthane.

La polymérisation à chaud s'effectue avantageusement pendant une durée de l'ordre de douze à dix-huit heures.

Selon une forme de réalisation particulièrement avantageuse, la feuille de matière synthétique est de haute densité et thermoformable et contient un agent de filtration du rayonnement ultraviolet.

On peut procéder à un thermoformage pour réaliser une mise en forme appropriée dudit support de base avant l'application de la couche colorée et/ou de la couche additionnelle.

La plaque de revêtement selon l'invention, issue de ce procédé, est caractérisée en ce qu'elle comporte un support de base constitué d'une feuille de matière synthétique polymérisée, une couche d'une substance colorée choisie parmi les encres polyesters ou acryliques, ou une peinture à base de polyuréthane, ou une couche de placage en bois naturel collée au moyen d'une colle acrylique, et une couche protectrice appliquée sur la couche colorée, ou la couche de placage.

Selon un mode de réalisation préféré, la plaque de revêtement comporte à sa surface supérieure une couche dure, résistant à l'abrasion, obtenue à partir d'une solution colloïdale de silice en suspension dans un solvant synthétique.

On peut également utiliser comme matériau de base une feuille de matière synthétique de haute densité et thermoformable, contenant un agent de filtration de rayonnement ultraviolet.

La présente invention sera mieux comprise en référence à la description d'exemples de réalisation et du dessin annexé, dans lequel :

la fig. 1 représente une vue en perspective d'une première forme de réalisation d'une plaque de revêtement selon l'invention,

la fig. 2 représente une vue en perspective d'une autre forme de réalisation d'une plaque de revêtement selon l'invention, et

les fig. 3A, 3B et 3C illustrent trois formes particulières d'une plaque de revêtement selon l'invention.

Le procédé de fabrication de la présente invention débute par l'utilisation d'un matériau brut se présentant sous la forme d'une plaque ou d'une feuille de base obtenue par moulage ou extrusion et réalisée en un polymère synthétique qui est habituellement clair et transparent. Toutefois, pour obtenir certains effets visuels, on peut également utiliser des supports de base colorés ou teintés ou ayant des degrés de transparence variés. En outre, on peut utiliser des feuilles structurées ou "texturées" de façon appropriée.

Ce type de matériau est courant et commercialisé à l'état brut ou revêtu d'une couche de surface durcie. On le trouve dans diverses dimensions ou épaisseurs. A titre d'exemple, on peut utiliser le produit commercialisé par la société Bally CTU sous la dénomination "ESALITE" ou le "PLEXIGLASS XT230" commercialié par le société Rohm GmbH, domiciliées toutes deux en Suisse. Parmi ces matériaux on peut également citer les polycarnonates

Comme mentionné précédemment, on peut également utiliser un matériau comportant une surface durcie. Un tel matériau est, par exemple, commercialisé sous la désignation "ACRIFLEX". Etant donné que ce produit est déjà pourvu d'une surface durcie, on peut éviter une etape dans le processus de fabrication. Toutefois, l'existence de cette couche durcie impose certaines limitations de sorte que l'utilisation de ce produit est quelque peu limitée.

La première phase du procédé consiste à nettoyer la feuille de polymère synthétique pour éloigner tous les composants résiduels tels que les colles, la poussière, les saletés ou autres contaminants susceptibles de dégrader les qualités du support de base ou de gêner les étapes suivantes du procédé de fabrication. On prépare ensuite la surface du support de base en effectuant un sablage ou une abrasion manuelle ou mécanique par jet de sable ou jet de billes métalliques propulsées mécaniquement ou véhiculées par de l'air comprimé.

Par la suite, la plaque support de base est revêtue sur l'une de ses faces, à savoir sa face arrière, ou sur une partie d'une de ses faces, d'un composé coloré qui peut être une encre synthétique, par exemple à base de polyester ou acrylique, une solution tinctoriale ou des pigments colorés liés par une résine, par exemple une peinture à base de polyuréthane.

L'application de cette couche colorée peut être effectuée en une ou plusieurs opérations successives permettant d'obtenir l'effet souhaité. Cette application peut être effectuée à la brosse, au rouleau, au jet de peinture pulvérisée, au pistolet à air, à la brosse à air ou par criblage. Il est bien entendu possible de déposer cette couche colorée d'une manière uniforme ou par séquences, ou au moyen de caches ou de gabarits pour obtenir les différents effets voulus.

A la suite de l'application de la couche colorée, le matériau est soumis à une phase de polymérisation et de séchage au cours de laquelle l'excès de solvant est évacué par evaporation et la polymérisation du polyuréthane, ou des résines de polyesters, est activee par un rayonnement infrarouge, ultraviolet ou alpha.

Après la phase de coloration, on applique une couche protectrice par des techniques habituelles de pulvérisation, au rouleau, au jet, etc., sur la face arrière du matériau, par dessus la couche colorée. Ce revêtement est également pigmenté de façon sélective pour réaliser une apparence colorée définitive et identifiable à l'arrière du produit.

Par la suite, le produit est soumis à une seconde phase de séchage et de polymérisation, similaire à celle qui a suivi l'application de la couche de coloration.

Le produit est alors soit terminé, soit destiné à être soumis à un processus de durcissement de la surface.

Dans le cas où le produit est destiné à être soumis à un processus de durcissement de la surface, on dépose à sa surface un composé de silice constitué de préférence d'une solution colloïdale de silice en suspension dans un solvant synthetique. Ce dépôt est effectué par des methodes classiques telles que le jet ou similaire. Le matériau de revêtement est alors transféré dans une chambre de polymérisation où il est maintenu pendant environ douze à dix-huit heures à température élevée. Après cette phase de polymérisation destinée à réaliser une couche de surface dure, résistant à l'abrasion, le matériau est en principe terminé. Toutefois, on peut assurer la protection de sa surface au moyen d'une feuille de papier ou de matière synthétique de protection déposée à la fois sur sa face frontale et sur sa face arrière.

On notera que la phase d'application de la couche colorée peut être remplacée par une phase de fixation d'une couche de placage en bois naturel.

Dans le cas particulier où les objets destinés à recevoir ce revêtement protecteur ou décoratif, ont des formes particulières, on peut être amené à mettre en forme le support de base par un procédé de thermoformage. La chaleur peut être amenée de toute source appropriée, par exemple par de l'air chaud, par rayonnement ou par des éléments de chauffage par contact. Cette phase de mise en forme se place entre la phase de nettoyage et la phase de coloration.

Le processus décrit ci-dessus s'applique à toute plaque de revêtement telle que définie ci-dessus ayant une épaisseur variant sensiblement entre 0,5 mm à 5 mm. Toutefois, dans des cas particuliers, des matériaux ayant une épaisseur jusqu'à 50 mm peuvent être utilisés.

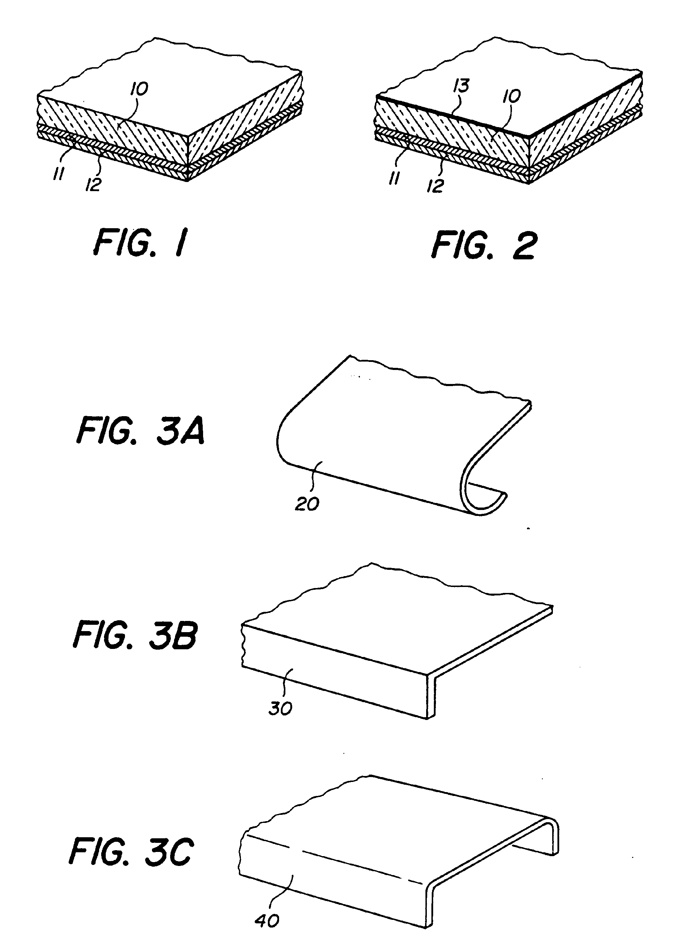

En référence aux fig. 1 et 2, la plaque de revêtement protecteur et/ou décoratif obtenue par le procédé ci-dessus comporte un support de base 10 constitué d'une feuille de matière synthétique polymérisable de haute densité et thermoformable contenant un agent de filtration au rayonnement ultraviolet, une couche de peinture 11, qui peut également être remplacée par une couche de placage en bois naturel, et une couche de protection 12 qui constitue la surface arrière du produit. La surface frontale peut, comme le montre la fig. 2, recevoir une couche de surface durcie réalisée au moyen d'une solution à base de silice.

Les fig. 3A, 3B et 3C illustrent respectivement des plaques de revêtement ayant un bord arrondi 20 (fig. 3A), un bord à angle droit 30 (fig. 3B) et se présentant sous la forme d'un profil en U 40 (fig. 3C)

La présente invention n'est pas limitée aux formes de réalisation décrites, mais peut subir différentes modifications et se présenter sous diverses variantes évidentes pour l'homme de l'art.

## Revendications

1. Procédé de fabrication d'une plaque de revêtement protecteur et/ou décoratif agencée pour être appliquée sur une surface quelconque d'un objet, notamment d'un élément de mobilier, caractérisé en ce qu'on utilise comme support de base une feuille d'une matière synthétique polymérisée transparente, en ce qu'on applique une couleur en déposant sur une surface arrière une substance colorée choisie parmi les matériaux suivants : encres polyesters ou acryliques, peintures à base de polyuréthane, ou en ce que l'on colle une couche de placage en bois naturel au moyen d'une colle acrylique, et en ce qu'on applique une couche protectrice sur la couche colorée ou la couche de placage.

2. Procédé selon la revendication 1, caractérisé en ce qu'on applique sur la surface supérieure de la plaque de revêtement, une couche additionnelle résistant à l'abrasion en déposant une solution colloïdale de silice en suspension dans un solvant synthétique et en procédant à une polymérisation à chaud de cette solution.

3. Procédé selon la revendication 1, caractérisé en ce qu'on applique la couleur par dépôt d'une substance colorée selon l'une des techniques suivantes : criblage, pulvérisation, dépôt au rouleau ou à la brosse, jet de peinture.

4. Procédé selon la revendication 1, caractérisé en ce que ladite substance colorée comporte au moins un des composés suivants : encres synthétiques à base de polyester ou acryliques, solution tinctoriale, pigments colorés liés par une résine, peinture à base de polyurethane.

5. Procédé selon la revendication 2, caractérisé en ce que la polymérisation à chaud s'effectue pendant une durée de l'ordre de douze à dix-huit heures.

6. Procédé selon la revendication 1, caractérisé en ce que la feuille de matière synthétique transparente est de haute densité et thermoformable et contient un agent de filtration du rayonnement ultraviolet.

7. Procédé selon la revendication 1, caractérisé en ce que l'on procède à un thermoformage pour réaliser une mise en forme appropriée de ladite feuille de matière synthetique servant de support de base, avant l'application de la couche colorée et/ou de la couche additionnelle.

8. Plaque de revêtement protecteur et/ou décoratif, selon le procédé de l'une quelconque des revendications précédentes, caractérisée en ce qu'elle comporte un support de base constitué d'une feuille de matière synthétique polymérisée (10) transparente, une couche (11) d'une substance colorée choisie parmi les encres polyesters ou acryliques, ou une peinture à base de polyuréthane, ou une couche de placage en bois naturel collée au moyen d'une colle acrylique, et une couche protectrice (12) appliquée sur la couche colorée, ou la couche de placage.

9. Plaque de revêtement selon la revendication 8, caractérisée en ce qu'elle comporte à sa surface supérieure une couche dure (13), résistant à l'abrasion, obtenue à partir d'une solution colloïdale de silice en suspension dans un solvant synthétique.

10. Plaque de revêtement selon la revendication 8, caractérisée en ce que la feuille de matière synthétique formant le support de base a une haute densité, est thermoformable, et contient un agent de filtration du rayonnement ultraviolet.

## Patentansprüche

1. Verfahren zur Herstellung einer Platte für einen Schutz- und/oder Dekorationsüberzug, die eingerichtet ist, um auf irgendeine Fläche eines Gegenstandes, insbesondere eines Möbelstückes aufgebracht zu werden, **dadurch gekennzeichnet, daß** als Grundträger eine Folie aus einem durchsichtigen, polymerisierten Kunststoff verwendet wird, daß eine Farbe aufgetragen wird, in dem man auf einer hinteren Seite ein Farbstoff aufbringt, der unter den folgenden Materialien ausgewählt wird: Polyester- oder Acrylfarben, Anstrichfarben auf Polyurethanbasis, oder mit Hilfe eines Acrylklebers ein Furnierblatt aus Naturholz angeklebt, und daß auf der Farbschicht oder auf der furnierten Schicht eine Schutzschicht aufgebracht wird.

2. Verfahren nach Anspruch 1, **dadurch gekennzeichnet, daß** auf der oberen Seite der Überzugsplatte eine zusätzliche Schicht, die abriebfest ist, aufgebracht wird, in dem eine kolloidale Silikonlösung, die in einem künstlichen Lösungsmittel aufgeschwemmt ist, aufgetragen und eine warme Polymerisierung dieser Lösung durchgeführt wird.

3. Verfahren nach Anspruch 1, **dadurch gekennzeichnet, daß** die Farbe aufgetragen wird, in dem nach einer der folgenden Techniken ein Farbstoff aufgebracht wird: Sieben, Zerstäuben, Aufbringung mit Rolle oder Pinsel, Spritzen.

4. Verfahren nach Anspruch 1, **dadurch gekennzeichnet, daß** der besagte Farbstoff mindestens eine der folgenden Verbindungen: Kunstfarben auf Polyester- oder Acrylbasis, Färbelösung, harzgebundene farbige Pigmente, Anstrichfarbe auf Polyurethanbasis enthält.

5. Verfahren nach Anspruch 2, **dadurch gekennzeichnet, daß** die warme Polymerisierung während einer Zeitdauer von rund zwölf bis achtzehn Stunden erfolgt.

6. Verfahren nach Anspruch 1, **dadurch gekennzeichnet, daß** die durchsichtige Folie aus Kunststoff von hoher Dichte und thermo-verformbar ist und ein Filtermittel für die UV-Strahlen enthält.

7. Verfahren nach Anspruch 1, **dadurch gekennzeichnet, daß** eine Thermo-Verformung durchgeführt wird, um eine geeignete Formgebung der besagten Folie aus Kunststoff, die als Grundträger dient, vor dem Aufbringen der gefärbten Schicht und/oder der zusätzlichen Schicht, auszuführen.

8. Überzugsplatte für einen Schutz- und/oder Dekorationsüberzug gemäß dem Verfahren nach einem der vorstehenden Ansprüche, **dadurch gekennzeichnet, daß** sie als Grundträger eine Folie aus einem durchsichtigen polymerisierten Kunststoff (10), eine Schicht (11) aus einem Farbstoff, der unter den Polyester- oder Acrylfarben gewählt wird, oder einen Anstrich auf Polyurethanbasis oder eine Schicht aus einem Furnierblatt aus Naturholz, die mit Hilfe eines Acrylklebers angeklebt wird, und eine Schutzschicht (12), die auf der Farbschicht oder auf der furnierten Schicht aufgebracht ist, enthält.

9. Überzugsplatte nach Anspruch 8, **dadurch gekennzeichnet, daß** sie auf ihrer oberen Seite eine harte Schicht (13) enthält, die abriebfest ist und die mit einer kolloidalen Silikonlösung, die in einem künstlichen Lösungsmittel aufgeschwemmt ist, erzielt wird.

10. Überzugsplatte nach Anspruch 8, **dadurch gekennzeichnet, daß** die Folie aus Kunststoff, die den Grundträger bildet, eine hohe Dichte aufweist, thermoverformbar ist und Filtermittel für die UV-Strahlen enthält.

## Claims

1. Method of manufacturing a protective and/or decorative surfacing material adapted to be applied to any surface of an object, e.g. an element of furniture, characterized in that a sheet of transparent synthetic polymer material is used as base support, in that a colour coating is applied by depositing on a back surface of the base support a coloured substance selected from the following materials : polyester or acrylic inks, polyurethane paints, or in that a veneer of natural wood is bonded by means of an acrylic adhesive, and in that a protective layer is applied over the coloured layer or the veneer.

2. Method according to claim 1, characterized in that an additional abrasion resistant layer is applied on the front surface of the surfacing material by depositing a colloidal solution of silica in suspension in a synthetic solvent and by heat curing the deposited substance.

3. Method according to claim 1, characterized in that the colour coating is applied by depositing a coloured substance by one of the following processes : colour screening, spraying, roller applicator, brushing, paint jet.

4. Method according to claim 1, characterized in that said coloured substance includes at least one of the following compositions : polyester-based or acrylic synthetic inks, dye, resin bonded colour pigments, polyurethane paint.

5. Method according to claim 2, characterized in that said heat curing is carried out for a period of about 12 to 18 hours.

6. Method according to claim 1, characterized in that a high density and thermoformable synthetic material including an ultraviolet filtering agent is used as sheet of transparent synthetic material.

7. Method according to claim 1, characterized in that an appropriate shape of said sheet of synthetic material used as base support is realised by thermoforming before the application of the coloured layer and/or additional layer.

8. Protective and/or decorative surfacing material, manufactured by the method according to any one of the preceeding claims, characterized in that it comprises a base support formed of a sheet (10) of transparent synthetic polymer material, a coloured layer (11) of a coloured substance selected from polyester inks or acrylic inks, or a polyurethane paint, or a veneer of natural wood being bonded by means of an acrylic adhesive, and a protective layer (12) applied over the coloured layer or the veneer.

9. Surfacing material according to claim 8, characterized in that it comprises a front surface having a hard, abrasion resistant layer (13) obtained from a colloidal solution of silica in suspension in a synthetic solvent.

10. Surfacing material according to claim 8, characterized in that the sheet of synthetic material used as base support is of a high density, is a thermoformable synthetic material and includes an ultra- violet filtering agent.

FIG. 1

FIG. 2

FIG. 3A

FIG. 3B

FIG. 3C